# EUROPEAN PATENT APPLICATION

(11) **EP 4 415 070 A1**
(43) Date of publication of application: **14.08.2024**
(21) Application number: 24153469.2
(22) Date of filing: 23.01.2024
(51) Int. Cl.: H01M 4/134, H01M 4/1395, H01M 4/36, H01M 10/052, H01M 4/02

(54) **ACTIVE MATERIAL COMPOSITE PARTICLE, SECONDARY BATTERY, AND PRODUCTION METHOD FOR ACTIVE MATERIAL COMPOSITE PARTICLE**

(30) Priority: 13.02.2023 JP 2023019922
(71) Applicant: TOYOTA JIDOSHA KABUSHIKI KAISHA, Toyota-shi, Aichi-ken, 471-8571 (JP)
(72) Inventor: UCHIYAMA, Takayuki, Toyota-shi, 471-8571 (JP); WAKASUGI, Satoshi, Toyota-shi, 471-8571 (JP)
(74) Representative: D Young & Co LLP

(57) **Abstract**

Disclosed is an active material composite particle including Si and having low volume expansion in charging. The active material composite particle of present disclosure comprises a plurality of first particles and at least one second particle, wherein the first particles comprise porous silicon, a reaction potential between the second particle and Li is lower than a reaction potential between the porous silicon and Li, and a ratio D₂/D₁ of a particle diameter D₂ of the second particle to a particle diameter Di of the first particles is 2.0 or more.

## Description

### TECHNICAL FIELD

The present application discloses an active material composite particle, a secondary battery, and a production method for an active material composite particle.

### BACKGROUND ART

PTL 1 discloses a production method for a porous silicon material. Porous silicon materials are used, for example, as active materials in secondary batteries. The silicon material used as the active material in secondary batteries has a large volumetric change during charging and discharging. For example, if the amount of expansion of the silicon material as the active material is large, the restraining pressure of the secondary battery tends to increase significantly. Conversely, it is considered that by making the silicon material porous to have voids, the expansion of the silicon material is alleviated by the voids, thereby reducing the increase in the restraining pressure of the secondary battery.

### CITATION LIST

### PATENT LITERATURE

PTL 1 Japanese Unexamined Patent Publication No. 2022-150481

### SUMMARY

### TECHNICAL PROBLEM

A new technology with which the increase in restraining pressure of secondary battery can be reduced is needed.

### SOLUTION TO PROBLEM

As means for achieving the object described above, the present disclosure provides a plurality of Aspects below.
<Aspect 1> An active material composite particle, comprising a plurality of first particles and at least one second particle, wherein
   the first particles comprise porous silicon,
   a reaction potential between the second particle and Li is lower than a reaction potential between the porous silicon and Li, and
   a ratio D₂/D₁ of a particle diameter D₂ of the second particle to a particle diameter D₁ of the first particles is 2.0 or more.
<Aspect 2> The active material composite particle according to Aspect 1, wherein
   the porous silicon constituting the first particles is amorphous, and
   the second particle comprises crystalline silicon.
<Aspect 3> The active material composite particle according to Aspect 2, wherein the crystalline silicon constituting the second particle is porous.
<Aspect 4> The active material composite particle according to any of Aspects 1 to 3, wherein the second particle is present inside the first particles.
<Aspect 5> The active material composite particle according to any of Aspects 1 to 4, wherein a binder is included together with the first particles and the second particle.
<Aspect 6> The active material composite particle according to any of Aspects 1 to 5, wherein the second particle is spherical.
<Aspect 7> A secondary battery, comprising a positive electrode active material layer, an electrolyte layer, and a negative electrode active material layer, wherein the negative electrode active material layer contains the active material composite particle according to any of Aspects 1 to 6.
<Aspect 8> The secondary battery according to Aspect 7, wherein
   at least one of the positive electrode active material layer, the electrolyte layer, and the negative electrode active material layer comprises a solid electrolyte.
<Aspect 9> A production method for an active material composite particle, the method comprising: dropletizing a slurry containing a plurality of first particles, at least one second particle, and a solvent to obtain a slurry droplet, and
   gasflow-drying the slurry droplet in a heated gas to obtain an active material composite particle containing the plurality of first particles and the at least one second particle, wherein the first particles comprise porous silicon,
   a reaction potential between the second particle and Li is lower than a reaction potential between the porous silicon and Li, and
   a ratio D₂/D₁ of a particle diameter D₂ of the second particle to a particle diameter D₁ of the first particles is 2.0 or more.
<Aspect 10> The production method according to Aspect 9, wherein
   the dropletizing the slurry and the gasflow-drying the slurry droplet are performed by spray-drying.
<Aspect 11> The production method according to Aspect 9 or 10, wherein
   the slurry contains a binder together with the first particles and the second particle.

### ADVANTAGEOUS EFFECTS OF INVENTION

According to the active material composite particle of the present disclosure, an increase in restraining pressure of the secondary battery can be reduced.

### BRIEF DESCRIPTION OF DRAWINGS

FIG. 1A schematically shows an example of the cross-sectional shape of an active material composite particle.
FIG. 1B schematically shows an example of the cross-sectional shape of an active material composite particle.
FIG. 2 schematically shows an example of the configuration of a secondary battery.
FIG. 3 shows an example of the flow of a production method for an active material composite particle.
FIG. 4A is an SEM image of a cross-section of the active material composite particle according to Example 1.
FIG. 4B is an EDS image view showing the Si distribution in the cross-section of the active material composite particle according to Example 1.
FIG. 5A is an SEM image of a cross-section of the active material composite particle according to Example 2.
FIG. 5B is an EDS image view showing the Si distribution in the cross-section of the active material composite particle according to Example 2.

### DESCRIPTION OF EMBODIMENTS

### 1. Active Material Composite Particle

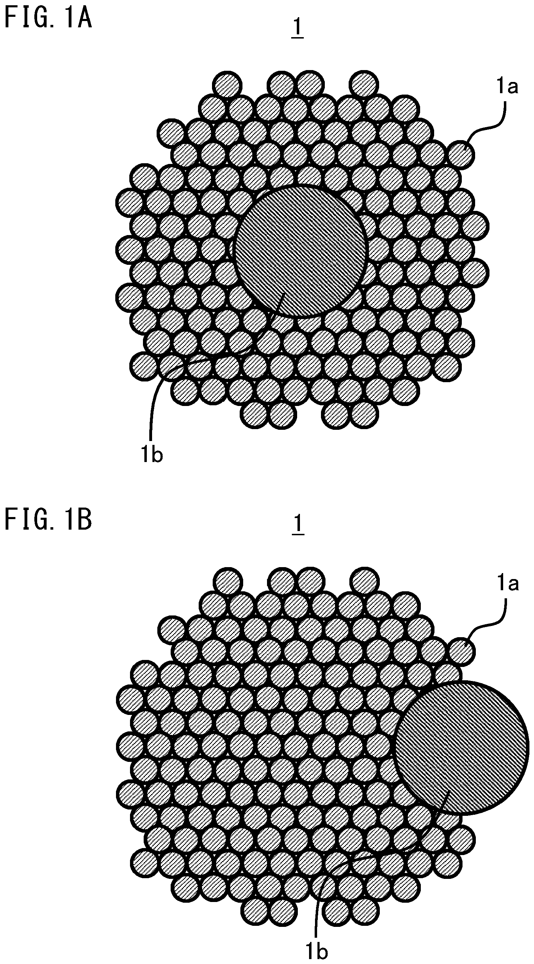

FIGS. 1A and 1B schematically show the cross-sectional structure of active material composite particle 1 according to an embodiment. As shown in FIGS. 1A and 1B, the active material composite particle 1 comprises a plurality of first particles 1a and at least one second particle 1b. The first particles 1a comprise porous silicon. The reaction potential between the second particle 1b and Li is lower than the reaction potential between the porous silicon and Li. The ratio D₂/D₁ of the particle diameter D₂ of the second particle 1b to the particle diameter D₁ of the first particles 1a is 2.0 or more.

### 1.1 First Particles

The active material composite particle 1 includes a plurality of first particles 1a. Each first particle 1a comprises porous silicon.

### 1.1.1 Chemical Composition of First Particles

The chemical composition of the first particles 1a is not particularly limited. The proportion of elemental Si relative to all elements contained in the first particles 1a may be, for example, 50 mol% or more and 100 mol% or less, 70 mol% or more and 100 mol% or less, or 90 mol% or more and 100 mol% or less. The first particles 1a may contain other elements in addition to elemental Si. The other elements may be at least one of elemental Li, elemental Sn, elemental Fe, elemental Co, elemental Ni, elemental Ti, elemental Cr, elemental Al, elemental B, and elemental P. When obtaining the first particles 1a by removing Li from Li-Si alloy particles, the first particles 1a may contain elemental Li as well as elemental Si. The first particles 1a may contain impurities such as oxides.

### 1.1.2 Crystallinity of First Particles

The first particles 1a may be amorphous or crystalline. In particular, when the first particles 1a are amorphous, higher performance as an active material is likely to be obtained. Among these, as will be described later, higher performance is likely to be obtained when the porous silicon constituting the first particles 1a is amorphous and the second particle 1b comprises crystalline silicon. Whether or not the first particles 1a are amorphous can be determined by X-ray diffraction measurement or the like.

### 1.1.3 Pores and Voids of First Particles

The first particles 1a comprise porous silicon. It is considered that because the first particles 1a are porous and have voids, the voids can absorb the expansion of the silicon and reduce the increase in restraining pressure of the secondary battery. The first particles 1a may be particles comprising, for example, nanoporous silicon. Nanoporous silicon refers to silicon in which a plurality of pores each having a pore diameter on the nanometer order (less than 1000 nm, preferably 100 nm or less) are present. The first particles 1a may be porous silicon particles containing pores with a diameter of 55 nm or less. Pores with a diameter of 55 nm or less are unlikely to collapse even when pressed. Specifically, porous silicon particles having pores with a diameter of 55 nm or less tend to maintain a porous state even after pressing. For example, 0.21 cc or more and 0.30 cc/g or less of pores with a diameter of 55 nm or less may be included per gram of the first particles 1a. The lower limit may be 0.22 cc/g or more, or 0.23 cc/g or more, and the upper limit may be 0.28 cc/g or less, or 0.26 cc/g or less. The quantity of pores with a diameter of 55 nm or less contained in the first particles 1a can be determined, for example, from the pore size distribution by a nitrogen gas adsorption method or a DFT method.

The porosity of the first particles 1a is not particularly limited. The porosity of the first particles 1a may be, for example, 1% or more and 80% or less. The lower limit may be 5% or more, 10% or more, or 20% or more, and the upper limit may be 70% or less, 60% or less, 50% or less, 40% or less, or 30% or less. The porosity of the first particles 1a can be determined, for example, by observation using a scanning electron microscope (SEM). The number of samples is preferably large, for example, 100 or more. The porosity can be an average value obtained from these samples.

### 1.1.4 Size of First Particles

The size of the first particles 1a is not particularly limited. The particle diameter D₁ of the first particles 1a may be, for example, 10 nm or more and 10 µm or less. The lower limit may be 30 nm or more, 50 nm or more, 100 nm or more, or 150 nm or more, and the upper limit may be 5 µm or less, 3 µm or less, 2 µm or less, or 1 µm or less. Note that the particle diameter D₁ of the first particles 1a can be determined by observation using an electron microscope such as an SEM, and is determined as the number average value of the maximum Feret diameter of each of the plurality of particles. The number of samples is preferably large, for example, 20 or more, and may be 50 or more, or may be 100 or more. The particle diameter D₁ of the first particles 1a can be adjusted as appropriate by, for example, appropriately changing the production conditions of the porous silicon particles or performing a classification process.

### 1.1.5 Shape of First Particles

As described above, the first particles 1a are only required to comprise porous silicon, and the shape thereof is not particularly limited. For example, the first particles 1a may be spherical or non-spherical.

### 1.1.6 Number of First Particles

The number of first particles 1a included in the active material composite particle 1 is not particularly limited. The number of first particles 1a included in one active material composite particle 1 may be 2 or more and 10,000 or less. The lower limit may be 5 or more, 10 or more, 50 or more, or 100 or more, and the upper limit may be 5000 or less, 1000 or less, or 500 or less.

### 1.2 Second Particle

The active material composite particle 1 comprises at least one second particle 1b. The reaction potential between the second particle 1b and Li is lower than the reaction potential between the porous silicon constituting the first particles 1a and Li. Specifically, the second particle 1b reacts with Li at a lower potential than the porous silicon constituting the first particles 1a. For example, when the active material composite particle 1 is used as the negative electrode active material of a secondary battery, the first particles 1a tend to react with Li earlier than the second particle 1b when charging the secondary battery. The silicon constituting the first particles 1a expands by reacting with Li. As described above, the first particles 1a comprise porous silicon, and can be expected to have the effect of the voids on alleviating the apparent volume expansion. Since the second particle 1b is included together with the first particles 1a, even if the first particles 1a expand, the second particle 1b functions as a pillar, and the shape and voids of the active material composite particle 1 as a whole are maintained, whereby the volume expansion of the active material composite particle 1 as a whole can be further reduced. As a result, an increase in restraining pressure of the secondary battery can be reduced.

### 1.2.1 Chemical Composition of Second Particle

The chemical composition of the second particle 1b is not particularly limited. As described above, it is sufficient that the reaction potential between the second particle 1b and Li be lower than the reaction potential between the porous silicon constituting the first particles 1a and Li. In other words, the second particle 1b needs only to react with Li at a potential lower than that of the porous silicon constituting the first particles 1a, and an optimal material is selected in accordance with the charge/discharge potential of the porous silicon constituting the first particles 1a. The second particle 1b may or may not comprise silicon. However, when the second particle 1b comprises silicon, higher performance is likely to be exhibited. As described later, when the second particle 1b comprises silicon, the charge/discharge potential may change depending on the crystallinity of the second particle 1b. When the second particle 1b comprises silicon, the proportion of elemental Si relative to all elements contained in the second particle 1b may be, for example, 50 mol% or more and 100 mol% or less, 70 mol% or more and 100 mol% or less, or 90 mol% or more and 100 mol% or less. The second particle 1b may comprise other elements in addition to elemental Si. The other elements may be at least one selected from elemental Li, elemental Sn, elemental Fe, elemental Co, elemental Ni, elemental Ti, elemental Cr, elemental Al, elemental B, and elemental P. When the second particle 1b comprises silicon, impurities such as oxides may be contained together with silicon. Examples of second particle 1b not containing silicon include particles containing at least one selected from graphite and lithium.

### 1.2.2 Crystallinity of Second Particle

The second particle 1b may be amorphous or crystalline. In particular, when the second particle 1b is crystalline, even higher performance is likely to be obtained. Among these, higher performance is likely to be obtained when the porous silicon constituting the first particles 1a described above is amorphous and the second particle 1b comprises crystalline silicon. The second particle 1b may have a diamond-type Si crystalline phase. The crystalline phase has typical peaks at 2θ = 28.4°, 47.3°, 56.1°, 69.2°, and 76.4° in XRD measurement using CuKα rays. These peak positions may be shifted back and forth within a range of ± 0.5°, or may be shifted back and forth within a range of ± 0.3°. In this manner, even if the first particles 1a and the second particle 1b both contain elemental Si as a constituent element, by using particles having different crystallinities for the first particles 1a and the second particle 1b, the second particle 1b reacts with Li at a lower potential than the porous silicon constituting the first particles 1a. In particular, when the first particles 1a comprise amorphous porous silicon and the second particle 1b comprises crystalline silicon, the reaction potential between the second particle 1b and Li tends to be clearly lower than the reaction potential between the porous silicon constituting the first particles 1a and Li.

### 1.2.3 Pores and Voids of Second Particle

The second particle 1b may or may not be porous. When the second particle 1b is porous, it is considered that the voids can absorb the expansion of the silicon and further reduce the increase in restraining pressure of the secondary battery. For example, when the second particle 1b comprises crystalline silicon, the crystalline silicon constituting the second particle 1b may be porous. The second particle 1b may be a particle comprising, for example, crystalline nanoporous silicon. The second particle 1b may be a crystalline nanoporous silicon particle containing pores with a diameter of 55 nm or less. Pores with a diameter of 55 nm or less are unlikely to collapse even when pressed. Specifically, crystalline nanoporous silicon particles containing pores with a diameter of 55 nm or less tend to maintain a porous state even after pressing. For example, 0.21 cc or more and 0.30 cc/g or less of pores with a diameter of 55 nm or less may be included per gram of the second particle 1b. The lower limit may be 0.22 cc/g or more, or 0.23 cc/g or more, and the upper limit may be 0.28 cc/g or less, or 0.26 cc/g or less. The quantity of pores with a diameter of 55 nm or less contained in the second particle 1b can be determined from the pore size distribution by, for example, a nitrogen gas adsorption method or a DFT method.

When the second particle 1b is porous, the porosity thereof is not particularly limited. The porosity of the second particle 1b may be, for example, 1% or more and 80% or less. The lower limit may be 5% or more, 10% or more, or 20% or more, and the upper limit may be 70% or less, 60% or less, 50% or less, 40% or less, or 30% or less. The porosity of the second particle 1b can be determined, for example, by observation using a scanning electron microscope (SEM). The number of samples is preferably large, for example, 100 or more. The porosity can be an average value obtained from these samples.

### 1.2.4 Size of Second Particle

The size of the second particle 1b is not particularly limited as long as the ratio D₂/D₁ of the particle diameter D₂ to the particle diameter D₁ is 2.0 or more. The particle diameter D₂ of the second particle 1b may be, for example, 100 nm or more, 500 nm or more, or 1 µm or more, or 100 µm or less, 50 µm or less, 10 µm or less, or 5 µm or less. Note that the particle diameter D₂ of the second particle 1b can be determined by observation using an electron microscope such as an SEM, similarly to the particle diameter D₁ described above, and is determined as the average value of the maximum Feret diameter of each of the plurality of particles. The number of samples is preferably large, for example, 20 or more, may be 50 or more, or may be 100 or more. The particle diameter D₂ of the second particle 1b can be adjusted as appropriate, for example, by appropriately changing the manufacturing conditions or performing a classification process.

In the active material composite particle 1, when the second particle 1b is sufficiently larger than the first particles 1a, the second particle 1b functions more appropriately as a pillar, and the above-mentioned effect is likely to be further enhanced. In this regard, in the active material composite particle 1, the ratio D₂/D₁ of the particle diameter D₂ of the second particle 1b to the particle diameter D₁ of the first particles 1a is 2.0 or more. The upper limit of the ratio D₂/D₁ is not particularly limited. The ratio D₂/D₁ may be 2.0 or more and 100.0 or less. The lower limit may be 5.0 or more, 7.0 or more, or 10.0 or more, and the upper limit may be 70.0 or less, 50.0 or less, or 30.0 or less.

### 1.2.5 Shape of Second Particle

The shape of the second particle 1b is not particularly limited. For example, the second particle 1b may be spherical or non-spherical. In particular, when the second particle 1b is spherical, it is considered that the second particle 1b tends to function more appropriately as a pillar, and the expansion of the first particles 1a in the active material composite particle 1 tends to be more isotropic. "Spherical" means that the circularity is 0.80 or more. The circularity of the second particle 1b is 0.81 or more, 0.82 or more, 0.83 or more, 0.84 or more, 0.85 or more, 0.86 or more, 0.87 or more, 0.88 or more, 0.89 or more, or 0.90 or more. The circularity of the second particle 1b is defined as 4πS/L². S is the orthogonal projected area of the second particle 1b, and L is the perimeter of the orthographically projected image of the second particle 1b. The circularity of the second particle 1b can be determined by observing the appearance of the particle using a scanning electron microscope (SEM), a transmission electron microscope (TEM), or an optical microscope. When one active material composite particle 1 includes a plurality of second particles 1b, the circularity of the plurality of second particles 1b is measured as a number average value of the circularity of each second particle 1b.

### 1.2.6 Number of Second Particles

The number of second particles 1b included in the active material composite particle 1 is not particularly limited. The number of second particles 1b included in one active material composite particle 1 may be 1 or more, 2 or more, 10 or less, 7 or less, or 5 or less. In an embodiment, the number of second particles 1b included in one active material composite particle 1 is 1 or 2. Further, in an embodiment, the number of second particles 1b included in one active material composite particle 1 is one.

### 1.3 Reaction Potentials of First Particles and Second Particle Relative to Li

As described above, the reaction potential between the second particle 1b and Li is lower than the reaction potential between the porous silicon constituting the first particles 1a and Li. For example, the reaction potential between the second particle 1b and Li may be 0.10 V or less or 0.05 V or less, and the reaction potential between the porous silicon constituting the first particles 1a and Li may be 0.20 V or more or 0.30 V or more. "Reaction potential" refers to average reaction potential. The reaction potential between the first particles 1a and Li can be calculated from the charging curve when only the first particles 1a are used as the active material of a lithium-ion secondary battery and charged as the counter electrode Li metal. Similarly, the reaction potential between the second particle 1b and Li can be calculated from the charging curve when only the second particles 1b are used as the active material of a lithium-ion secondary battery and charged as the counter electrode Li metal.

### 1.4 Positional Relationship Between First Particles and Second Particle

The positional relationship between the first particles 1a and the second particle 1b in the active material composite particle 1 is not particularly limited. For example, as shown in FIG. 1A, in the active material composite particle 1, the second particle 1b may be present inside the first particles 1a. In other words, the active material composite particle 1 may have a core and a shell, the core may contain at least one second particle 1b, the shell may contain a plurality of first particles 1a, and may not contain the second particle 1b. Alternatively, as shown in FIG. 1B, in the active material composite particle 1, the second particle 1b may be exposed on the outer surface of the composite particle 1. In particular, as shown in FIG. 1A, when the second particle 1b is present inside the first particles 1a, the expansion of the first particles 1a tends to be isotropic, and the expansion of the active material composite particle 1 as a whole tends to be reduced.

### 1.5 Content Ratio of First Particles and Second Particle

The content ratio of the first particles 1a and the second particle 1b in the active material composite particle 1 is not particularly limited. For example, when the total of the first particles 1a and the second particle 1b is 100% by volume, the volume percentage of the first particles 1a may be 1% by volume or more and 99% by volume or less, 10% by volume or more and 90% by volume or less, 20% by volume or more and 80% by volume or less, 30% by volume or more and 70% by volume or less, or 40% by volume or more and 60% by volume or less.

### 1.6 Other Components

The active material composite particle 1 comprises at least the first particles 1a and the second particle 1b described above. Furthermore, the active material composite particle 1 may optionally contain other components.

### 1.6.1 Binder

The active material composite particle 1 may comprise a binder together with the first particles 1a and the second particle 1b. The binder may have, for example, the function of binding the first particles 1a to each other or the function of binding the first particles 1a and the second particle 1b. The location of the binder in the active material composite particle 1 is not particularly limited. The binder may be present on the surface layer side of the active material composite particle 1, may be present on the center side, or may be present on both sides. The type of binder is not particularly limited. As the binder, various binders known as constituent materials of secondary batteries may be employed. For example, it may be at least one type selected from butadiene rubber (BR) based binders, butylene rubber (IIR) based binders, acrylate butadiene rubber (ABR) based binders, styrene butadiene rubber (SBR) based binders, polyvinylidene fluoride (PVdF) based binders, polytetrafluoroethylene (PTFE) based binders, polyimide (PI) based binders, carboxymethyl cellulose (CMC) based binders, polyacrylic acid based binders, and polyacrylic acid ester based binders. In particular, the performance of PVdF binders is high. The PVdF binder may be a copolymer having units derived from monomers other than VdF. One binder may be used alone, or two or more binders may be used in combination.

When the active material composite particle 1 comprises a binder together with the first particles 1a and the second particle 1b, the total mass ratio of the first particles 1a and the second particle 1b in the active material composite particle 1 is not particularly limited. For example, the active material composite particle 1 may contain a total of 50% by mass or more and 99% by mass or less of the first particles 1a and the second particle 1b. The mass ratio of the binder in the active material composite particle 1 is not particularly limited. For example, the active material composite particle 1 may contain 1% by mass or more and 50% by mass or less of the binder. Furthermore, the ratio of the first particles 1a, the second particle 1b, and the binder included in the active material composite particle 1 is not particularly limited as long as the composite particle 1 can be formed. For example, the ratio of the binder relative to the total of the first particles 1a, the second particle 1b, and the binder may be 1% by mass or more and 50% by mass or less, and the lower limit may be 5% by mass or more, or 8% by mass or more, and the upper limit may be 40 mass% or less, 35 mass% or less, or 30 mass% or less. When the ratio of the binder is 1% by mass or more and 50% by mass or less, a larger charge/discharge capacity can be easily secured.

### 1.6.2 Other Components Other Than Binder

The active material composite particle 1 may comprise only of the above-mentioned first particles 1a, second particle 1b, and an arbitrary binder (and voids), or may comprise other components other than these. Examples of other components include various solid components and liquid components.

### 1.7 Particle Diameter of Active Material Composite Particle

The active material composite particles 1 can be regarded as secondary particles in which a plurality of first particles 1a and at least one second particle 1b are aggregated. The average particle diameter of the composite particles 1 is not particularly limited. The average particle diameter of the composite particles 1 may be 100 nm or more, 1 µm or more, 2 µm or more, or 3 µm or more, and 100 µm or less, 50 µm or less, 20 µm or less, 15 µm or less, or 10 µm or less. The average particle diameter of the composite particles 1 can be determined by observation using an electron microscope such as SEM, and is determined, for example, as an average value of the maximum Feret diameters of a plurality of composite particles. The number of samples is preferably large, for example, 20 or more, and may be 50 or more, or may be 100 or more. Alternatively, only the composite particles 1 can be removed, and the average particle diameter (D50, median diameter) of the composite particles 1 measured using a laser diffraction particle distribution measuring device may be 100 nm or more, 1 µm or more, 2 µm or more, or 3 µm or more, and may be 100 µm or less, 50 µm or less, 20 µm or less, 15 µm or less, or 10 µm or less.

### 1.8 Structure and Shape of Active Material Composite Particle

The active material composite particle 1 may have, for example, a major axis and a minor axis before use in a secondary battery. The ratio of the major axis to the minor axis (major axis/minor axis) may be, for example, 1.0 or more or 1.1 or more, or 1.3 or less or 1.2 or less. Conversely, when applying the active material composite particles 1 to a negative electrode active material layer of a secondary battery, the negative electrode active material layer can be formed by pressing a negative electrode active material mixture containing the active material composite particles 1. At this time, the composite particles 1 may be crushed in the pressing direction and may have an aspect ratio greater than a predetermined value. By pressing the composite particles 1 to such an extent that they have an aspect ratio of a predetermined value or more, the contact resistance within the composite particles, the contact resistance between the composite particles, the contact resistance between the composite particles and other materials, etc., are easily reduced. Specifically, from the viewpoint of further reducing the resistance of the negative electrode, when observing the cross-section of the negative electrode active material layer, more than half (50 % or more in number of particles) of the plurality of composite particles 1 extracted by the extraction method below may have an aspect ratio of 1.5 or more.

Extraction method: the cross-section of the active material layer is observed, the composite particles contained in the cross-section are extracted in descending order of cross-sectional area. When the total area of the extracted composite particles exceeds 80% of the total area of all of the composite particles contained in the cross-section, the extraction is terminated.

Note that the above extraction method may be performed by image analysis based on a cross-sectional image of the active material layer obtained by SEM or the like. In image analysis, composite particles included in an image may be approximated to an ellipse, and the aspect ratio of each composite particle may then be identified.

### 2. Secondary Battery

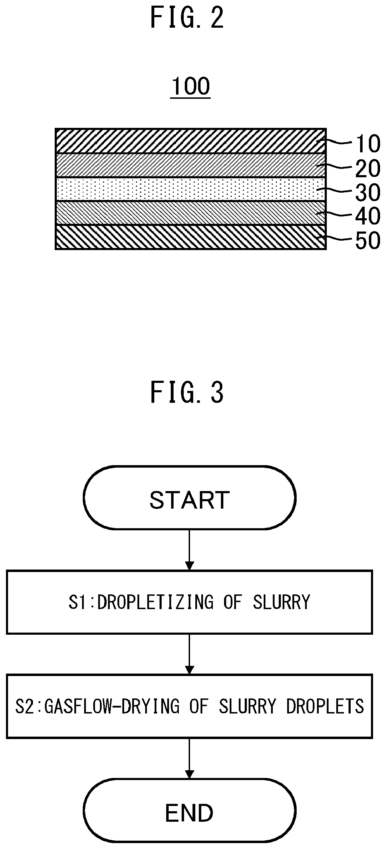

FIG. 2 schematically shows the configuration of a secondary battery 100 according to an embodiment. As shown in FIG. 2, the secondary battery 100 comprises a positive electrode active material layer 20, an electrolyte layer 30, and a negative electrode active material layer 40, and the negative electrode active material layer 40 comprises the active material composite particle 1 described above. The problem of the above-mentioned increase in restraining pressure is more likely to become apparent when the secondary battery 100 includes a solid electrolyte. In this regard, in the secondary battery 100, at least one of the positive electrode active material layer 20, the electrolyte layer 30, and the negative electrode active material layer 40 may include a solid electrolyte. Further, in the secondary battery 100, at least the negative electrode active material layer 40 may include a solid electrolyte. Further, in the secondary battery 100, all of the positive electrode active material layer 20, the electrolyte layer 30, and the negative electrode active material layer 40 may include a solid electrolyte. Furthermore, the secondary battery 100 may be a solid-state battery. Solid-state batteries are batteries in which an electrolyte having carrier ion conductivity is mainly composed of a solid electrolyte. However, liquid components may be partially included. Alternatively, the secondary battery 100 may be an all-solid-state battery containing substantially no liquid components. As shown in FIG. 2, the secondary battery 100 may comprise a positive electrode current collector 10 in contact with the positive electrode active material layer 20. Further, the secondary battery 100 may comprise a negative electrode current collector 50 in contact with the negative electrode active material layer 40.

### 2.1 Positive Electrode Current Collector

As the positive electrode current collector 10, any common positive electrode current collector for secondary batteries can be adopted. Further, the positive electrode current collector 10 may have at least one shape selected from foil, plate, mesh, punched metal, and foamed. The positive electrode current collector 10 may be composed of a metal foil or metal mesh. In particular, metal foil has excellent handling properties. The positive electrode current collector 10 may be composed of a plurality of sheets of foil. As the metal forming the positive electrode current collector 10, one or more can be selected from Cu, Ni, Cr, Au, Pt, Ag, Al, Fe, Ti, Zn, Co, V, Mg, Pb, Ge, In, Sn, Zr, and stainless steel. In particular, from the viewpoint of ensuring oxidation resistance, the positive electrode current collector 10 may comprise Al. The positive electrode current collector 10 may have some type of coating layer on the surface thereof for the purpose of adjusting resistance or the like. For example, the positive electrode current collector 10 may have a carbon coating layer. Further, the positive electrode current collector 10 may be a metal foil or a base material on which the above-mentioned metal is plated or vapor-deposited. When the positive electrode current collector 10 is composed of a plurality of metal foils, it may have some type of layer between the plurality of metal foils. The thickness of the positive electrode current collector 10 is not particularly limited. For example, it may be 0.1 µm or more and 1 mm or less, the lower limit may be 1 µm or more, and the upper limit may be 100 µm or less.

### 2.2 Positive Electrode Active Material Layer

The positive electrode active material layer 20 comprises at least a positive electrode active material. Further, the positive electrode active material layer 20 may optionally contain an electrolyte, a conductive aid, a binder, various additives, and the like. The content of each component in the positive electrode active material layer 20 may be appropriately determined in accordance with the desired battery performance. For example, when the total solid content of the positive electrode active material layer 20 is 100% by mass, the content of the positive electrode active material may be 40% by mass or more, 50% by mass or more, 60% by mass or more, or 70% by mass or more, and may be 100% by mass or less, less than 100% by mass, 95% by mass or less, or 90% by mass or less. Alternatively, when the entire positive electrode active material layer 20 is 100% by volume, the positive electrode active material and optionally an electrolyte, a conductive aid, and a binder may be contained in a total of 85% by volume or more, 90% by volume or more, or 95% by volume or more, and the remainder may be voids or other components. The shape of the positive electrode active material layer 20 is not particularly limited, and it may be in the form of, for example, a substantially flat sheet. The thickness of the positive electrode active material layer 20 is not particularly limited, and may be, for example, 0.1 µm or more and 2 mm or less, the lower limit may be 1 µm or more, 10 µm or more, or 30 µm or more, and the upper limit may be 1 mm or less, 500 µm or less, or 100 µm or less.

### 2.2.1 Positive Electrode Active Material

As the positive electrode active material, any known positive electrode active material for secondary batteries can be used. Among known active materials, a material with a relatively noble potential (charging/discharging potential) for intercalating and releasing predetermined carrier ions can be used as the positive electrode active material, and a material with the potential being relatively basic can be used as the negative electrode active material. When the secondary battery 100 is a lithium-ion battery, the positive electrode active material may be, for example, at least one selected from various lithium-containing compounds, elemental sulfur, sulfur compounds, etc. The lithium-containing compound as the positive electrode active material may be a lithium-containing oxide containing at least one of elemental M, Li, and O. Elemental M may be, for example, at least one selected from Mn, Ni, Co, Al, Mg, Ca, Sc, V, Cr, Cu, Zn, Ga, Ge, Y, Zr, Sn, Sb, W, Pb, Bi, Fe, and Ti, and may be at least one selected from the group consisting of Mn, Ni, Co, Al, Fe, and Ti. More specifically, the lithium-containing oxide may be at least one selected from lithium cobalt oxide, lithium nickel oxide, lithium manganate, lithium nickel cobalt oxide, lithium nickel manganate, lithium cobalt manganate, nickel cobalt lithium manganate (Li_{1±α}NiₓCo_{y}Mn_{z}O_{2±δ} (for example, 0 < x < 1, 0 < y < 1, 0 < z < 1, and x + y + z = 1)), spinel-based lithium compounds (different element-substituted Li-Mn spinel with a composition represented by Li₁₊ₓMn_{2-x-y}M_{y}O₄ (M is one or more selected from Al, Mg, Co, Fe, Ni, and Zn), etc.), nickel cobalt lithium aluminate (for example, Li_{1±α}NiₚCo_{q}AlᵣO_{2±δ} (for example, p + q + r = 1)), lithium titanate, and lithium metal phosphate (LiMPO₄, etc., where M is one or more selected from Fe, Mn, Co, and Ni). In particular, when the positive electrode active material comprises a lithium-containing oxide containing at least one of Ni, Co, and Mn, Li, and O as constituent elements, the performance of the secondary battery is likely to be further improved. Alternatively, when the positive electrode active material comprises a lithium-containing oxide containing at least one of Ni, Co, and Al, Li, and O as constituent elements, the performance of the secondary battery is likely to be further improved. One type of positive electrode active material may be used alone, or two or more types may be used in combination.

The shape of the positive electrode active material may be any shape commonly used as a positive electrode active material in secondary batteries. The positive electrode active material may be in the form of, for example, particles. The positive electrode active material may have voids, for example, and may be porous or hollow. The positive electrode active material may be primary particles, or may be secondary particles formed by aggregating a plurality of primary particles. The average particle diameter D50 of the positive electrode active material may be, for example, 1 nm or more and 500 µm or less, the lower limit may be 5 nm or more or 10 nm or more, and the upper limit may be 100 µm or less, 50 µm or less, or 30 µm or less. Note that the average particle diameter D50 referred to in the present disclosure is a particle diameter (median diameter) at an integrated value of 50% in a volume-based particle size distribution determined by a laser diffraction/scattering method.

### 2.2.2 Protective Layer

An ionically-conductive protective layer may be formed on the surface of the positive electrode active material. Specifically, the positive electrode active material layer 20 may comprise a composite of a positive electrode active material and a protective layer, and in the composite, at least a portion of the surface of the positive electrode active material may be covered with the protective layer. As a result, for example, reactions between the positive electrode active material and other battery materials (such as the sulfide solid electrolyte, which will be described later) can be easily suppressed. The ionically-conductive protective layer can include a variety of ionically-conductive compounds. The ionically-conductive compounds may be, for example, at least one selected from ionically-conductive oxides, ionically-conductive halides, etc.

The ionically-conductive oxide may include, for example, at least one element selected from B, C, Al, Si, P, S, Ti, La, Zr, Nb, Mo, Zn, and W, and may include Li, and O. The ionically-conductive oxide may be an oxynitride containing N. More specifically, the ionically-conductive oxide may be at least one selected from Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄, LiPON, Li₂O-LaO₂, and Li₂O-ZnO₂. The ionically-conductive oxide may have some elements replaced by various doping elements.

The ionically-conductive halide may be, for example, at least one of various compounds exemplified as the halide solid electrolyte described below. The ionically-conductive halide may include, for example, at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm, at least one halogen element selected from the group consisting of Cl, Br, I, and F, and Li. The ionically-conductive halide may include at least one selected from the group consisting of Ti, Al, Gd, Ca, Zr, and Y, at least one selected from the group consisting of Cl, Br, I, and F, and Li. Further, the ionically-conductive halide may include at least one element selected from the group consisting of Ti and Al, at least one element selected from the group consisting of Cl, Br, I, and F, and Li. The ionically-conductive halide may be, for example, a composite halide of Li, Ti, Al, and F.

The coverage (area ratio) of the protective layer on the surface of the positive electrode active material may be, for example, 70% or more, 80% or more, or 90% or more. The thickness of the protective layer may be, for example, 0.1 nm or more and 100 nm or less, the lower limit may be 1 nm or more, and the upper limit may be 20 nm or less.

### 2.2.3 Electrolyte

The positive electrode active material layer 20 may comprise an electrolyte. The electrolyte which may be included in the positive electrode active material layer 20 may be a solid electrolyte, a liquid electrolyte, or a combination of a solid electrolyte and a liquid electrolyte.

### 2.2.3.1 Solid Electrolyte

As the solid electrolyte, an electrolyte which is known as a solid electrolyte for secondary batteries may be used. The solid electrolyte may be an inorganic solid electrolyte or an organic polymer electrolyte. In particular, inorganic solid electrolytes have excellent ionic conductivity and heat resistance. Examples of inorganic solid electrolytes include oxide solid electrolytes, sulfide solid electrolytes, and ionically-bonding inorganic solid electrolytes. Among inorganic solid electrolytes, sulfide solid electrolytes, and among them, sulfide solid electrolytes containing at least Li, S, and P as constituent elements have high performance. Alternatively, among inorganic solid electrolytes, ionically-bonding solid electrolytes, and among them, solid electrolytes containing at least Li, Y, and a halogen (at least one of Cl, Br, I, and F) as constituent elements have high performance. The solid electrolyte may be amorphous or crystalline. The solid electrolyte may be in the form of particles. The average particle diameter (D50) of the solid electrolyte may be, for example, 10 nm or more and 10 µm or less. The ionic conductivity of the solid electrolyte at 25 °C may be, for example, 1 × 10⁻⁵ S/cm or more, 1 × 10⁻⁴ S/cm or more, or 1 × 10⁻³ S/cm or more. One type of solid electrolyte may be used alone, or two or more types may be used in combination.

The oxide solid electrolyte may be one or more selected from lithium lanthanum zirconate, LiPON, Li_{1+X}Al_{X}Ge_{2-X}(PO₄)₃, Li-SiO glass, or Li-Al-S-O glass. Ionic conductivity can be improved when an oxide solid electrolyte and a liquid electrolyte are combined.

The sulfide solid electrolyte may be a glass-based sulfide solid electrolyte (sulfide glass), a glass-ceramic sulfide solid electrolyte, or a crystalline sulfide solid electrolyte. Sulfide glasses are amorphous. The sulfide glass may have a glass transition temperature (Tg). Further, when the sulfide solid electrolyte has a crystalline phase, examples of the crystalline phase include a Thio-LISICON crystalline phase, an LGPS crystalline phase, and an argyrodite crystalline phase.

The sulfide solid electrolyte may contain, for example, elemental Li, elemental X (where X is at least one of P, As, Sb, Si, Ge, Sn, B, Al, Ga, and In), and elemental S. The sulfide solid electrolyte may further contain at least one of elemental O and a halogen element. Further, the sulfide solid electrolyte may contain elemental S as a main component of the anion element.

The sulfide solid electrolyte may be, for example, at least one selected from Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers and Z is Ge, Zn, or Ga.), Li₂S-GeS₂, Li₂S-SiS₂-Li₃PO₄, and Li₂S-SiS₂-LiₓMO_{y} (where x and y are positive numbers, and M is one of P, Si, Ge, B, Al, Ga, and In.).

The composition of the sulfide solid electrolyte is not particularly limited, examples thereof include xLi₂S·(100-x)P₂S₅ (70 ≤ x ≤ 80), and yLiI·zLiBr·(100-y-z)(xLi₂S·(1-x)P₂S₅) (0.7 ≤ x ≤ 0.8, 0 ≤ y ≤ 30, and 0 ≤ z ≤ 30). Alternatively, the sulfide solid electrolyte may have a composition represented by the general formula: Li₄₋ₓGe₁₋ₓPₓS₄ (0 < x < 1). In this general formula, at least a portion of Ge may be substituted with at least one of Sb, Si, Sn, B, Al, Ga, In, Ti, Zr, V, and Nb. In this general formula, at least a portion of P may be substituted with at least one of Sb, Si, Sn, B, Al, Ga, In, Ti, Zr, V, and Nb. In this general formula, a portion of Li may be substituted with at least one of Na, K, Mg, Ca, and Zn. In this general formula, a portion of S may be substituted with a halogen (at least one of F, Cl, Br and I). Alternatively, the sulfide solid electrolyte may have a composition represented by Li₇₋ₐPS₆₋ₐXₐ (where X is at least one of Cl, Br, and I, and a is a number from 0 to 2). a may be 0 or greater than 0. In the latter case, a may be 0.1 or more, 0.5 or more, or 1 or more. Moreover, a may be 1.8 or less, or may be 1.5 or less.

The ionically-bonding solid electrolyte may include at least one element selected from, for example, Mg, Ca, Sr, Ba, Zn, Sn, Al, Sc, Ga, Bi, Sb, Zr, Hf, Ti, Ta, Nb, W, Y, Gd, Tb, and Sm. These elements can form cations in water. The ionically-bonding solid electrolyte may further contain, for example, at least one halogen element selected from the group consisting of Cl, Br, I, and F. These elements can form anions in water. The ionically-bonding solid electrolyte may contain at least one selected from the group consisting of Gd, Ca, Zr, and Y, at least one selected from the group consisting of Cl, Br, I, and F, and Li. The ionically-bonding solid electrolyte contains Li and Y, and may also contain at least one selected from the group consisting of Cl, Br, I, and F. More specifically, the ionically-bonding solid electrolyte may contain Li, Y, Cl, and Br, or may contain Li, Ca, Y, Gd, Cl, and Br. Alternatively, it may contain Li, Zr, Y, and Cl. More specifically, the ionically-bonding solid electrolyte may contain at least one among Li₃YBr₂Cl₄, Li_{2.8}Ca_{0.1}Y_{0.5}Gdo_{0.5}Br₂Cl₄, and Li_{2.5}Y_{0.5}Zr_{0.5}Cl₆.

The ionically-bonding solid electrolyte may be a halide solid electrolyte. Halide solid electrolytes have excellent ionic conductivity. The halide solid electrolyte may have, for example, the composition represented by formula (1):

Ei_{α}M_{β}X_{γ} ... (A)

Here, α, β and γ are each independently a value greater than 0, M is at least one selected from the group consisting of metal elements other than Li and metalloid elements, and X is at least one selected from the group consisting of Cl, Br, and I. Note that "metalloid elements" may be at least one selected from the group consisting of B, Si, Ge, As, Sb, and Te, and the "metal elements" may include (i) all elements contained in Groups 1 to 12 of the periodic table (excluding hydrogen) and (ii) all elements contained in Groups 13 to 16 of the periodic table (excluding B, Si, Ge, As, Sb, Te, C, N, P, O, S, and Se). The metal elements can form inorganic compounds with halide ions and become cations.

In formula (A), M may include Y (i.e., yttrium). The halide solid electrolyte containing Y may have a composition represented by LiₐMe_{b}Y_{c}X₆ (a + mb + 3c = 6, c > 0, Me is at least one selected from the group consisting of metal elements and metalloid elements other than Li and Y, and m is the valence of Me). Me may be, for example, at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): Li_{6-3d}Y_{d}X₆. In formula (A1), X is one or more elements selected from the group consisting of Cl, Br, and I. d may satisfy 0 < d < 2, or d = 1. The halide solid electrolyte may have a composition represented by formula (A2): Li_{3-3δ}Y_{1+δ}Cl₆. In formula (A2), 0 < δ≤ 0.15 may be satisfied. The halide solid electrolyte may have a composition represented by formula (A3): Li_{3-3δ}Y_{1+δ}Br₆. In formula (A3), 0 < δ ≤ 0.25 may be satisfied. The halide solid electrolyte may have a composition represented by formula (A4): Li_{3-3δ+a}Y_{1+δ-a}MeₐCl_{6-x-y}BrₓI_{y}. In formula (A4), Me may be at least one selected from the group consisting of Mg, Ca, Sr, Ba, and Zn. In formula (A4), for example, -1 < δ < 2, 0 < a < 3, 0 < (3-3δ+a), 0 < (1+δ-a), 0 ≤ x ≤ 6, 0 ≤ y ≤ 6, and (x+y) ≤ 6 are satisfied. The halide solid electrolyte may have a composition represented by formula (A5): Li_{3-3δ}Y_{1+δ-a}MeₐCl_{6-x-y}BrₓI_{y}. In formula (A5), Me may be at least one selected from the group consisting of Al, Sc, Ga, and Bi. In formula (A5), -1 < δ < 1, 0 < a < 2, 0 < (1+δ-a), 0 ≤ x ≤ 6, 0 ≤ y ≤ 6, and (x+y) ≤ 6 may be satisfied. The halide solid electrolyte may have a composition represented by formula (A6): Li_{3-3δ-a}Y_{1+δ-a}MeₐCl_{6-x-y}BrₓI_{y}. In formula (A6), Me may be at least one selected from the group consisting of Zr, Hf, and Ti. In formula (A6), -1 < δ < 1, 0 < a < 1.5, 0 < (3-3δ-a), 0 < (1+δ-a), 0 ≤ x ≤ 6, 0 ≤ y ≤ 6, and (x+y) ≤ 6 may be satisfied. The halide solid electrolyte may have a composition represented by formula (A7): Li_{3-3δ-2a}Y_{1+δ-a}MeₐCl_{6-x-y}BrₓI_{y}. In formula (A7), Me may be at least one selected from the group consisting of Ta and Nb. In formula (A7), -1 < δ < 1, 0 < a < 1.2, 0 < (3-3δ-2a), 0 < (1+δ-a), 0 ≤ x ≤ 6, 0 ≤ y ≤ 6, and (x+y) ≤ 6 may be satisfied.

The ionically-bonding solid electrolyte may be a complex hydride solid electrolyte. The complex hydride solid electrolyte may be composed of Li ions and complex ions containing H. The complex ions containing H may have, for example, an element M containing at least one of a nonmetal element, a metalloid element, and a metal element, and H bonded to the element M. Moreover, in the complex ions containing H, the element M as a central element and the H surrounding the element M may be bonded to each other via a covalent bond. Further, the complex ions containing H may be represented by (MₘHₙ)^{α-}. In this case, m is an arbitrary positive number, and n and α can be arbitrary positive numbers depending on m, the valence of the element M, and the like. The element M may be any nonmetal element or metal element that can form the complex ions. For example, the element M may contain at least one of B, C, and N as a nonmetal element, or may contain B. For example, the element M may include at least one of Al, Ni, and Fe as a metal element. In particular, when the complex ions contain B or contain C and B, higher ionic conductivity is likely to be secured. Specific examples of the complex ions containing H include (CB₉H₁₀)⁻, (CB₁₁H₁₂)⁻, (B₁₀H₁₀)²⁻, (B₁₂H₁₂)²⁻, (BH₄)⁻, (NH₂)⁻, (AlH₄)⁻, and combinations thereof. In particular, higher ionic conductivity is easily ensured when (CB₉H₁₀)⁻, (CB₁₁H₁₂)⁻, or a combination thereof is used. Specifically, the complex hydride solid electrolyte may contain Li, C, B, and H.

### 2.2.3.2 Liquid Electrolyte

The liquid electrolyte (electrolytic solution) is a liquid containing carrier ions. When the secondary battery 100 is a lithium-ion battery, the electrolyte contains lithium ions. The electrolytic solution may be an aqueous electrolytic solution or a non-aqueous electrolytic solution. The composition of the electrolytic solution may be the same as that known as the composition of an electrolytic solution for secondary batteries. The electrolytic solution may be one in which a lithium salt is dissolved in water or a non-aqueous solvent. Examples of non-aqueous solvents include carbonate-based solvents. Examples of carbonate-based solvents include fluoroethylene carbonate (FEC), ethylene carbonate (EC), and dimethyl carbonate (DMC). Examples of lithium salts include LiPF₆, LiTFSI, and LiFSI.

### 2.2.4 Conductive Aid

Examples of the conductive aid that can be included in the positive electrode active material layer 20 include carbon materials such as vapor grown carbon fiber (VGCF), acetylene black (AB), Ketjen black (KB), carbon nanotubes (CNT), and carbon nanofibers (CNF); and metal materials such as nickel, titanium, aluminum, and stainless steel. The conductive aid may be in the form of particles or fibers, and the size thereof is not particularly limited. One type of conductive aid may be used alone, or two or more types may be used in combination.

### 2.2.5 Binder

Examples of the binder that can be included in the positive electrode active material layer 20 include butadiene rubber (BR) binders, butylene rubber (IIR) binders, acrylate butadiene rubber (ABR) binders, styrene butadiene rubber (SBR) binders, polyvinylidene fluoride (PVdF) binders, polytetrafluoroethylene (PTFE) binders, and polyimide (PI) binders. One binder may be used alone, or two or more binders may be used in combination.

### 2.2.6 Others

The positive electrode active material layer 20 may contain various additives in addition to the above-mentioned components. Examples include dispersants and lubricants.

The positive electrode active material layer 20 can be produced by adopting a known method. For example, the positive electrode active material layer 20 can be easily formed by dry or wet molding of a positive electrode mixture containing the various components described above. The positive electrode active material layer 20 may be molded together with the positive electrode current collector 10 or separately from the positive electrode current collector 10.

### 2.3 Electrolyte Layer

The electrolyte layer 30 is arranged between the positive electrode active material layer 20 and the negative electrode active material layer 40. The electrolyte layer 30 includes at least an electrolyte. The electrolyte layer 30 may contain one or both of a solid electrolyte and a liquid electrolyte (electrolytic solution), and may further optionally contain a binder, various additives, and the like. The contents of the electrolyte, binder, etc., in the electrolyte layer 30 are not particularly limited. Alternatively, the electrolyte layer 30 may include a separator or the like for retaining the electrolytic solution and preventing contact between the positive electrode active material layer 20 and the negative electrode active material layer 40. The thickness of the electrolyte layer 30 is not particularly limited, and may be, for example, 0.1 µm or more and 2 mm or less, the lower limit may be 1 µm or more, and the upper limit may be 1 mm or less.

The electrolyte layer 30 may consist of one layer or may consist of a plurality of layers. For example, the electrolyte layer 30 may comprise a first layer disposed on the positive electrode active material layer 20 side and a second layer disposed on the negative electrode active material layer 40 side, the first layer may contain a first electrolyte, and the second layer may contain a second electrolyte. The first electrolyte and the second electrolyte may be of different types. The first electrolyte and the second electrolyte may each be at least one selected from the above-mentioned oxide solid electrolytes, sulfide solid electrolytes, and ionically-bonding solid electrolytes. For example, the first layer may include an ionically-bonding solid electrolyte, and the second layer may include at least one of an ionically-bonding solid electrolyte and a sulfide solid electrolyte.

The electrolyte included in the electrolyte layer 30 may be appropriately selected from those exemplified as electrolytes which can be included in the positive electrode active material layer 20 (solid electrolyte and/or liquid electrolyte). The binder which can be included in the electrolyte layer 30 may be appropriately selected from among the binders that can be included in the positive electrode active material layer 20 described above. The electrolytes or binders may be used alone or in combination of two or more. The separator may be any separator commonly used in secondary batteries, and examples thereof include those composed of resin such as polyethylene (PE), polypropylene (PP), polyester, and polyamide. The separator may have a single layer structure or a multilayer structure. Examples of the multi-layer separator include a PE/PP two-layer separator, and a PP/PE/PP or PE/PP/PE three-layer separator. The separator may be composed of a nonwoven fabric such as a cellulose nonwoven fabric, a resin nonwoven fabric, or a glass fiber nonwoven fabric.

### 2.4 Negative Electrode Active Material Layer

The negative electrode active material layer 40 includes at least the above-described active material composite particle 1 as a negative electrode active material. Further, the negative electrode active material layer 40 may optionally contain an electrolyte, a conductive aid, a binder, various additives, and the like. The content of each component in the negative electrode active material layer 40 may be appropriately determined in accordance with the desired battery performance. For example, when the total solid content of the negative electrode active material layer 40 is 100% by mass, the content of the negative electrode active material may be 40% by mass or more, 50% by mass or more, 60% by mass or more, or 70% by mass or more, and may be 100% by mass or less, less than 100% by mass, 95% by mass or less, or 90% by mass or less. Alternatively, when the total content of the negative electrode active material layer 40 is 100% by volume, the negative electrode active material and optionally the electrolyte, conductive aid, and binder may be contained in a total of 85% by volume or more, 90% by volume or more, or 95% by volume or more, and the remainder may be voids or other components. The shape of the negative electrode active material layer 40 is not particularly limited, and may be, for example, in the form of a substantially flat sheet. The thickness of the negative electrode active material layer 40 is not particularly limited, and may be, for example, 0.1 µm or more and 2 mm or less, the lower limit may be 1 µm or more, 10 µm or more, or 30 µm or more, and the upper limit may be 1 mm or less, 500 µm or less, or 100 µm or less.

### 2.4.1 Negative Electrode Active Material

The negative electrode active material layer 40 may contain only the above-mentioned active material composite particle 1 as the negative electrode active material, or may contain other negative electrode active materials together with the above-mentioned active material composite particle 1. When the total of the negative electrode active material contained in the negative electrode active material layer 40 is 100% by mass, the proportion of the negative electrode active material derived from the above active material composite particle 1 may be, for example, 50% by mass or more and 100% by mass or less, 70% by mass or more and 100% by mass or less, or 90% or more and 100% by mass or less. As the other negative electrode active materials, any known negative electrode active materials for secondary batteries can be used. Among known active materials, various materials which have a potential for intercalating and releasing predetermined carrier ions (charge/discharge potential) that is less noble than that of the positive electrode active material may be used. When the secondary battery 100 is a lithium-ion battery, the other negative electrode active material may be at least one selected from silicon-based active materials such as Si, Si alloys, and silicon oxide; carbon-based active materials such as graphite and hard carbon; and various oxide-based active materials such as lithium titanate; metallic lithium, lithium alloys, etc. One type of other negative electrode active materials may be used alone, or two or more types may be used in combination. The other negative electrode active materials may have any shape as long as they are common shapes for negative electrode active materials of secondary batteries. For example, the negative electrode active material may be in the form of particles. The negative electrode active material particles may be primary particles or may be secondary particles obtained by aggregating a plurality of primary particles. The average particle diameter (D50) of the negative electrode active material particles may be, for example, 1 nm or more and 500 µm or less, the lower limit may be 5 nm or more, or 10 nm or more, and the upper limit may be 100 µm or less, 50 µm or less, or 30 µm or less. Alternatively, the negative electrode active material layer 40 may include a sheet-like (foil-like, film-like) active material such as a lithium foil as the negative electrode active material.

### 2.4.2 Others

The electrolyte which can be included in the negative electrode active material layer 40 may be appropriately selected from those exemplified as electrolytes that can be included in the positive electrode active material layer 20 (solid electrolyte and/or liquid electrolyte). The conductive aid that can be included in the negative electrode active material layer 40 may be appropriately selected from, for example, those exemplified as the conductive aid that can be included in the positive electrode active material layer 20 described above. The binder that can be included in the negative electrode active material layer 40 may be appropriately selected from, for example, among the binders that can be included in the positive electrode active material layer 20 described above. The electrolytes, conductive aids, or binders may be used alone or in combination of two or more.

The negative electrode active material layer 40 may contain various additives in addition to the above-mentioned components. Examples thereof include dispersants and lubricants.

The negative electrode active material layer 40 can be produced by adopting a known method. For example, the negative electrode active material layer 40 can be easily formed by dry or wet molding of a negative electrode mixture containing the various components described above. The negative electrode active material layer 40 may be molded together with the negative electrode current collector 50, or may be molded separately from the negative electrode current collector 50.

### 2.5 Negative Electrode Current Collector

The negative electrode current collector 50 can be any general negative electrode current collector for secondary batteries. Further, the negative electrode current collector 50 may have a shape selected from foil, plate, mesh, punched metal, foamed, or the like. The negative electrode current collector 50 may be a metal foil or a metal mesh, or a carbon sheet. In particular, metal foils have excellent handling properties. The negative electrode current collector 50 may be composed of a plurality of foils or sheets. The metal constituting the negative electrode current collector 50 may be at least one selected from Cu, Ni, Cr, Au, Pt, Ag, Al, Fe, Ti, Zn, Co, V, Mg, Pb, Ge, In, Sn, Zr, and stainless steel. In particular, the negative electrode current collector 50 may contain at least one metal selected from Cu, Ni, and stainless steel, from the viewpoint of ensuring reduction resistance and from the viewpoint of not being easily alloyed with lithium. The negative electrode current collector 50 may have some type of coating layer on the surface thereof for the purpose of adjusting resistance or the like. For example, the negative electrode current collector 50 may have a carbon coating layer. The negative electrode current collector 50 may be an aluminum foil having a carbon coating layer. Further, the negative electrode current collector 50 may be a metal foil or a base material on which the above-mentioned metal is plated or vapor-deposited. When the negative electrode current collector 50 is composed of a plurality of metal foils, it may have some type of layer between the plurality of metal foils. The thickness of the negative electrode current collector 50 is not particularly limited. For example, it may be 0.1 µm or more and 1 mm or less, the lower limit may be 1 µm or more, and the upper limit may be 100 µm or less.

### 2.6 Other Configurations

In addition to the above configurations, the secondary battery 100 may have configurations which are conventional as a secondary battery. Examples thereof include tabs and terminals. The secondary battery 100 may have each of the above components housed inside an exterior body. As the exterior body, any known exterior body for batteries can be used. Further, a plurality of secondary batteries 100 may be arbitrarily electrically connected and arbitrarily stacked on top of each other to form an assembled battery. In this case, the assembled battery may be housed inside a known battery case. The secondary battery 100 may also include other obvious configurations such as necessary terminals. Examples of the shape of the secondary battery 100 include a coin shape, a laminate shape, a cylindrical shape, and a square shape.

### 3. Production Method for Secondary Battery

The secondary battery 100 can be produced by adopting a known method. For example, it can be produced as follows. However, the method for producing the secondary battery 100 is not limited to the following method, and each layer may be formed by, for example, dry molding.
(1) A negative electrode slurry is obtained by dispersing active material composite particles and the like constituting the negative electrode active material layer in a solvent. The solvent used in this case is not particularly limited, and water and various organic solvents can be used. Then, using a doctor blade or the like, the negative electrode slurry is applied onto the surface of the negative electrode current collector or electrolyte layer (which will be described later), and then dried, whereby a negative electrode active material layer is formed on the surface of the negative electrode current collector or electrolyte layer to obtain a negative electrode. The negative electrode active material layer may be press-molded.
(2) A positive electrode slurry is obtained by dispersing the positive electrode active material and the like constituting the positive electrode active material layer in a solvent. The solvent used in this case is not particularly limited, and water and various organic solvents can be used. Then, using a doctor blade or the like, the positive electrode slurry is applied onto the surface of the positive electrode current collector or the electrolyte layer (described below), and then dried, whereby the positive electrode active material layer is formed on the surface of the positive electrode current collector or electrolyte layer to obtain a positive electrode. The positive electrode active material layer may be press-molded.
(3) Each layer is laminated such that the electrolyte layer is interposed between the negative electrode and the positive electrode, and a laminate comprising the negative electrode current collector, the negative electrode active material layer, the electrolyte layer, the positive electrode active material layer, and the positive electrode current collector in this order is obtained. The electrolyte layer may be obtained by, for example, molding an electrolyte mixture containing an electrolyte and a binder, or may be obtained by press-molding the electrolyte mixture. The laminate may be further press-molded. Other members such as terminals are attached to the laminate as necessary. If an electrolytic solution is used, a separator may be used in the electrolyte layer.
(4) A secondary battery is obtained by housing the laminate in a battery case and sealing it.

### 4. Production Method for Active Material Composite Particle

The active material composite particle of the present disclosure can be produced in, for example, the flow shown in FIG. 3. Specifically, as shown in FIG. 3, the method for producing the active material composite particle according to an embodiment comprises dropletizing a slurry containing a plurality of first particles, at least one second particle, and a solvent to form a slurry droplet (step S1), and gasflow-drying the slurry droplet in a heated gas to obtain an active material composite particle comprising the plurality of first particles and the at least one second particle (step S2), wherein the first particles comprise porous silicon, the reaction potential between the second particle and Li is lower than the reaction potential between the porous silicon and Li, and the ratio D₂/D₁ of the particle diameter D₂ of the second particle to the particle diameter D₁ of the first particles is 2.0 or more. In the production method of the present disclosure, dropletizing the slurry and gasflow-drying the slurry droplet may be performed by spray-drying, as will be described later.

### 4.1 Step S1

In step S1, a slurry containing a plurality of first particles and at least one second particle is dropletized to obtain a slurry droplet. The first particles and the second particle are as described above.

In step S1, the first particles constituting the slurry may be produced through, for example, obtaining a LiSi precursor containing Li and Si, and removing Li from the LiSi precursor to obtain porous silicon particles. The LiSi precursor contains Li and Si as constituent elements. The LiSi precursor may be, for example, an alloy of Li and Si. The LiSi precursor may be any material as long as it can become porous by forming voids by removing Li. The LiSi precursor may have a Si (diamond) crystalline phase. The Si crystalline phase has typical peaks at 2θ = 28.4°, 47.3°, 56.1°, 69.2°, and 76.4° in XRD measurement using CuKα rays. These peak positions may be shifted back and forth within a range of ± 0.5°, or may be shifted back and forth within a range of ± 0.3°. The LiSi precursor may have a Si (diamond) crystalline phase as a main phase. The "main phase" refers to the crystalline phase to which the peak with the highest intensity belongs in the XRD chart. The LiSi precursor may have a Li₂₂Si₅ crystalline phase or a Li₁₅Si₄ crystalline phase. The crystalline phase of Li₂₂Si₅ has typical peaks at 2θ = 24.8° and 40.8° in XRD measurement using CuKα rays, and the crystalline phase of Li₁₅Si₄ has typical peaks at 2θ = 20.3°, 26.2°, 39.4°, 41.2° and 42.9° in XRD measurement using CuKα rays. These peak positions may be shifted back and forth within a range of ± 0.5°, or may be shifted back and forth within a range of ± 0.3°.

The composition of the LiSi precursor is not particularly limited. The LiSi precursor may contain only elemental Li and elemental Si, or may contain other elements in addition to elemental Li and elemental Si. The total ratio of elemental Li and elemental Si to all elements contained in the LiSi precursor may be, for example, 50 mol% or more, 70 mol% or more, or 90 mol% or more. In the LiSi precursor, the ratio of elemental Li to the total of elemental Li and elemental Si may be, for example, 30 mol% or more, 50 mol% or more, or 80 mol% or more, and 95 mol% or less, or 90 mol% or less. The LiSi precursor may be obtained by mixing a raw material containing elemental Li and a raw material containing elemental Si. For example, in the production method of the present disclosure, Si particles and metallic Li may be mixed to obtain a LiSi precursor. Examples of the mixing method include a method of mixing Si particles and metallic Li using an agate mortar, a method of mixing Si particles and metallic Li using a mechanical milling method, and the like. The temperature and pressure during mixing are not particularly limited. Heating or cooling may or may not be applied during mixing, and pressurization or reduced pressure may or may not be adopted. The atmosphere during mixing is not particularly limited, and may be, for example, an inert gas atmosphere such as an Ar atmosphere. The shapes and sizes of the Si particles and metallic Li to be mixed are not particularly limited, and may be appropriately selected in accordance with the shapes and sizes of the intended porous silicon particles.

The porous silicon particles can be obtained by removing Li from the LiSi precursor. It is not necessary to remove all of the Li from the LiSi precursor, and some elemental Li may remain in the porous silicon particles. The method for removing the Li from the LiSi precursor is not particularly limited. For example, the Li may be extracted from the LiSi precursor. A Li extraction solvent may be used to extract the Li. For example, by bringing the LiSi precursor into contact with a Li-extracting solvent, the Li-extracting solvent and Li react, and Li is extracted from the LiSi precursor into the Li-extracting solvent. The form in which the LiSi precursor is brought into contact with the Li extraction solvent is not particularly limited, and the LiSi precursor may be immersed in the Li extraction solvent, or the LiSi precursor may be sprayed with the Li extraction solvent. Further, the LiSi precursor and the Li extraction solvent may be mixed, or the LiSi precursor may be dispersed in a dispersion medium to form a dispersion liquid, and the dispersion liquid and the Li extraction solvent may be mixed. As the Li extraction solvent, for example, an alcohol such as methanol, ethanol, or propanol, can be used. The Li extraction solvent may contain a secondary solvent along with the alcohol. Examples of the secondary solvents include various acids. Depending on the type of the Li extraction solvent, the Li extraction rate differs, and the diameter of the pores formed after Li extraction changes. For example, comparing the cases where methanol is used, ethanol is used, and propanol is used, as a Li extraction solvent, the Li extraction rate is fastest when methanol is used, followed by ethanol, then 1-propanol, and then isopropanol. Furthermore, the pore diameter after Li extraction tends to be largest when methanol is used, followed by ethanol, then 1-propanol, and then isopropanol. The type of Li extraction solvent and the extraction time may be selected in accordance with the target pore diameter.

The voids formed in the porous silicon particles after Li extraction have various pore diameters. By adjusting the pore diameter in the porous silicon particles after Li extraction, the pores become unlikely to collapse even when the porous silicon particles are pressurized (for example, when the negative electrode is pressed during battery production). For example, as described above, by increasing the amount of pores with a diameter of 55 nm or less in the porous silicon particles, the pores become less likely to collapse, whereby expansion and contraction of the active material during charging and discharging can be further suppressed.

The porous silicon particles as the first particles may be produced through dispersing a LiSi precursor in a dispersion medium to obtain a dispersion liquid, and mixing the dispersion liquid with a Li extraction solvent to extract Li from the LiSi precursor to form voids. In this case, the pore diameter of the porous silicon particles after Li extraction can more easily be adjusted. Examples of the dispersion medium include one or more solvents selected from saturated hydrocarbons such as n-heptane, n-octane, n-decane, 2-ethylhexane, and cyclohexane; unsaturated hydrocarbons such as hexene and heptane; aromatic hydrocarbons such as 1,3,5-trimethylbenzene, toluene, xylene, ethylbenzene, propylbenzene, cumene, 1,2,4-trimethylbenzene, and 1,2,3-trimethylbenzene; and ethers such as n-butyl ether, n-hexyl ether, isoamyl ether, diphenyl ether, methylphenyl ether, and cyclopentyl methyl ether. Among these, one or more selected from n-butyl ether, 1,3,5-trimethylbenzene, and n-heptane are preferable, and 1,3,5-trimethylbenzene is particularly preferable. Note that it is preferable that the amount of water in the dispersion medium be small. This is because moisture reacts with the LiSi precursor. The amount of water in the dispersion medium may be, for example, 100 ppm or less, 50 ppm or less, 30 ppm or less, or 10 ppm or less. The proportion (solid content) of the LiSi precursor in the dispersion liquid is not particularly limited, and may be any proportion that allows the LiSi precursor to be dispersed in the dispersion medium. The dispersion liquid can be obtained by, for example, mixing a LiSi precursor and a dispersion medium. The mixing means in this case is not particularly limited.

The temperature and pressure when extracting Li from the LiSi precursor using the Li extraction solvent are not particularly limited. Heating or cooling may or may not be performed during Li extraction, and pressurization or depressurization may or may not be performed. The atmosphere during Li extraction and the Li extraction time are not particularly limited. The ratio of the LiSi precursor to the Li extraction solvent during Li extraction is not particularly limited. The temperature, pressure, time, and ratios may be adjusted so that the required amount of Li can be extracted from the LiSi precursor. The removal of Li from the LiSi precursor may be performed in one step, or may be performed in two or more steps. For example, the porous silicon particles may be obtained in one step only by reacting a LiSi precursor with a Li extraction solvent, or the porous silicon particles may be obtained via two or more steps of extraction processing by forming voids using a Li extraction solvent, and again extracting Li using a Li extraction solvent or extracting Li using an acid. By using an acid after using a Li extraction solvent, Li can be extracted more appropriately from the LiSi precursor. Examples of the acid include one or more of acetic acid, formic acid, propionic acid, and oxalic acid. Acetic acid is particularly preferable. The temperature, pressure, time, and volume ratios during Li extraction using an acid are not particularly limited. The porous silicon particles after Li extraction may be optionally washed. As a result, impurities contained in the porous silicon particles can be reduced. When the concentration of the LiSi precursor in the total of the LiSi precursor and the Li extraction solvent is high, the production efficiency increases, but conversely, the amount of impurities produced tends to increase. For example, when the concentration of the LiSi precursor is 3.3 g or more per L of Li extraction solvent, washing of the active material after Li extraction can improve production efficiency and reduce impurities. The washing may be, for example, acid washing in which the porous silicon particles are brought into contact with an acid. Note that the extraction of elemental Li using the acid described above may also serve as acid washing of the porous silicon particles.

In step S1, as described above, an optimal material for the second particle constituting the slurry is only required to be selected in accordance with the reaction potential between porous silicon constituting the first particles and Li. When a particle comprising crystalline silicon is used as the second particle, the crystalline silicon can be synthesized by a known method.

In step S1, the solvent constituting the slurry may be any solvent as long as it can disperse the first particles and the second particle. The slurry may include a binder along with the first particles and the second particle. In this case, the binder may be dissolved in the solvent. As the solvent capable of dissolving the binder, various organic solvents such as dimethyl carbonate can be used.

The "slurry" in step S1 may be a suspension or liquid suspension containing the first particles, the second particle, the solvent, and optionally the binder, as long as it has sufficient fluidity to enable dropletization. In step S1, the slurry may be imparted with sufficient fluidity to enable dropletization using, for example, a spray nozzle or a rotary atomizer. Note that the slurry may contain some solid component or liquid component in addition to the above-mentioned components.

"Dropletization" of the slurry in step S 1 means converting the slurry containing the first particles, second particle, and solvent into a granule containing the first particles, second particle, and solvent (and arbitrary binder). In step S1, the method of dropletizing the slurry is not particularly limited. For example, there is a method of dropletization by spraying the slurry. When spraying the slurry, a spray nozzle may be used. Methods for spraying a slurry using a spray nozzle include, but are not limited to, a pressurized nozzle method and a two-fluid nozzle method.

In step S 1, when the slurry is sprayed using a spray nozzle, the nozzle diameter is not particularly limited. The nozzle diameter may be, for example, 0.1 mm or more or 1 mm or more, or 10 mm or less or 1 mm or less. Furthermore, the spray speed of the slurry (the speed at which the slurry is supplied to the spray nozzle) is not particularly limited. The spray speed may be adjusted in accordance with the viscosity of the slurry, the solid content concentration, and the nozzle size.

In step S 1, as the method for dropletizing the slurry, in addition to the method of spraying the slurry using a spray nozzle as described above, for example, a method in which a slurry containing the first particles, the second particle, and the solvent (and the arbitrary binder) is fed onto a rotating disk at a constant speed, and dropletization is caused by centrifugal force can be exemplified. Even in this case, the feed rate of the slurry may be adjusted in accordance with the viscosity and solid content concentration of the slurry. Alternatively, a method of applying a high voltage to the surface of the slurry to cause dropletization can be adopted.

In the production method according to an embodiment, dropletization of the slurry (step S 1) and gasflow-drying (step S2) described below may be performed using, for example, a spray dryer. The method of the spray dryer is not particularly limited, and examples thereof include a method using the above-mentioned spray nozzle and a method using a rotating disk.

"Slurry droplet" is a droplet of slurry containing the first particles, second particle, and solvent (and binder). The size of slurry droplet is not particularly limited. The diameter (equivalent sphere diameter) of the slurry droplet may be, for example, 0.5 µm or more or 5 µm or more, or 5000 µm or less or 1000 µm or less. The diameter of the slurry droplet can be measured, for example, using a two-dimensional image obtained by imaging the slurry droplet, or can also be measured using a laser diffraction particle size distribution meter. Alternatively, the droplet diameter can also be estimated from the operating conditions of the device for forming slurry droplets.

In step S 1, the primary particles of the plurality of first particles 1a and at least one second particle 1b may be dispersed in a solvent to obtain a slurry without compositing the plurality of first particles 1a in advance, and the slurry is dropletized. According to this, the active material composite particle 1 as shown in FIG. 1A is obtained. Alternatively, in step S1, after a plurality of first particles 1a are composited in advance (secondary particle) to obtain first composite particles, the first composite particles and the second particle 1b may be dispersed in a solvent to form a slurry, and the slurry is dropletized. According to this, the active material composite particle 1 as shown in FIG. 1B is obtained.

### 4.2 Step S2

In step S2, the slurry droplet is gasflow-dried in a heated gas to obtain an active material composite particle comprising the plurality of first particles and the at least one second particle.

In the production method according to an embodiment, "gasflow-drying" means drying the slurry droplets while floating them in a high-temperature gasflow. "Gasflow-drying" may include not only drying but also ancillary operations by using dynamic gasflow. By continuing to apply hot gas to the slurry droplets by gasflow-drying, force is continuously applied to the slurry droplets. Utilizing this, for example, step S2 may include pulverizing (crushing) the slurry droplets and granules by gasflow-drying. In other words, in the method of the present disclosure, even when the slurry droplets are granulated, the granules can be crushed by gasflow-drying. Thus, a slurry having a low solid content concentration can be used, making it easy to increase processing speed. In step S2, the drying and crushing described above may be performed simultaneously or separately. In step S2, a first gasflow-drying in which the slurry droplets are predominately dried, and a second gasflow-drying in which the granules are predominately crushed may be performed. Moreover, step S2 may be repeated.

In step S2, the temperature of the heated gas may be any temperature that can volatilize the solvent from the slurry droplets. For example, the temperature may be 100 °C or higher, 110 °C or higher, 120 °C or higher, or 130 °C or higher, and may be 180 °C or lower, 170 °C or lower, 160 °C or lower, or 150 °C or lower.

In step S2, the supply amount (flow rate) of the heated gas can be appropriately set in consideration of the size of the device used and the supply amount of slurry droplets. For example, the flow rate of the heated gas may be 0.10 m³/min or more, 0.15 m³/min or more, 0.20 m³/min or more, 0.25 m³/min or more, 0.30 m³/min or more, 0.35 m³/min or more, 0.40 m³/min or more, 0.45 m³/min or more, or 0.50 m³/min or more, and may be 5.00 m³/min or less, 4.00 m³/min or less, 3.00 m³/min or less, 2.00 m³/min or less, or 1.00 m³/min or less.

In step S2, the supply speed (flow rate) of the heated gas can also be appropriately set in consideration of the size of the device used and the supply amount of slurry droplets. For example, the flow rate of the heated gas may be 1 m/sec or more or 5 m/sec or more, and may be 50 m/sec or less or 10 m/sec or less in at least a part of the system.

In step S2, the treatment time (drying time) with the heated gas can also be appropriately set in consideration of the size of the device used and the supply amount of slurry droplets. For example, the processing time may be 5 seconds or less, or 1 second or less.

In step S2, a heated gas which is substantially inert to the first particles, the second particle, and the solvent (and any binder) may be used. For example, an oxygen-containing gas such as air, an inert gas such as nitrogen or argon, or dry air having a low condensation point can be used. In such a case, the condensation point may be -10 °C or lower, -50 °C or lower, and may be -70 °C or higher.

As the device for performing gasflow-drying, for example, a spray dryer can be used, but the device is not limited thereto.

According to the above production method, the active material composite particle 1 as shown in FIG. 1A or FIG. 1B can be obtained. Specifically, a secondary particle in which the plurality of first particles 1a and the at least one second particle 1b are combined is obtained.

### 5. Method for Charging and Discharging Secondary Battery and Method for Improving Cycle Characteristics of Secondary Battery

When the active material composite particles of the present disclosure are included in the negative electrode of a secondary battery, an increase in the restraining pressure of the secondary battery is suppressed, and, for example, the cycle characteristics of the secondary battery are likely to be improved. Specifically, the method for charging and discharging a secondary battery and the method for improving the cycle characteristics of a secondary battery of the present disclosure include repeatedly charging and discharging the secondary battery, and the secondary battery comprises a positive electrode active material layer, an electrolyte layer, and a negative electrode active material layer, and the negative electrode active material layer includes the active material composite particles of the present disclosure. The charge end potential of the negative electrode of the secondary battery may be higher than the reaction potential between the second particles and Li.

### 6. Vehicle Comprising Secondary Battery

As described above, when the active material composite particles of the present disclosure are included in the negative electrode of a secondary battery, improvement in the cycle characteristics of the secondary battery can be expected. A secondary battery having excellent charge/discharge cycle characteristics can be suitably used in at least one type of vehicle selected from, for example, a hybrid vehicle (HEV), a plug-in hybrid vehicle (PHEV), and a battery electric vehicle (BEV). Specifically, the technology of the present disclosure provides a vehicle comprising a secondary battery, wherein the secondary battery comprises a positive electrode active material layer, an electrolyte layer, and a negative electrode active material layer, and the negative electrode active material layer comprises the active material composite particles of the present disclosure.

### EXAMPLES

Hereinafter, the technology of the present disclosure will be described in more detail while showing Examples, but the technology of the present disclosure is not limited to the following Examples.

### 1. Preparation of Negative Electrode Active Material

### 1.1 Comparative Example

0.65 g of Si particles (particle size 0.5 µm, manufactured by Kojundo Chemical Lab Co., Ltd.) and 0.60 g of Li metal (manufactured by Honjo Metal) were mixed in an agate mortar under an Ar atmosphere to obtain a LiSi precursor. In a glass reaction vessel under an Ar atmosphere, 1.0 g of the LiSi precursor and 125 ml of a dispersion medium (1,3,5-trimethylbenzene, manufactured by Nacalai Tesque, Inc.) were mixed using an ultrasonic homogenizer (UH-50, manufactured by SMT). The LiSi precursor dispersion liquid obtained after mixing was cooled to 0 °C, 125 ml of ethanol (manufactured by Nacalai Tesque, Inc.) was added dropwise thereto, and the mixture was reacted for 120 minutes. After the reaction, 50 ml of acetic acid (manufactured by Nacalai Tesque, Inc.) was further added dropwise thereto, and the reaction was continued for 60 minutes. After the reaction, the liquid and solid reactant (nanoporous Si particles) were separated by suction filtration. The obtained solid reaction product was vacuum dried at 120 °C for 2 hours to collect nanoporous Si particles (particle diameter: 500 nm). When the crystal structure of the nanoporous Si was analyzed by X-ray diffraction, it was found that the nanoporous Si was amorphous.

### 1.2 Example 1

The above nanoporous Si and PVdF-HFP binder (manufactured by Kureha Co., Ltd.) were dispersed in dimethyl carbonate (manufactured by Nacalai Tesque, Inc.) at a mass ratio of nanoporous Si particles: binder = 100:26.7 to obtain a slurry. This slurry was sprayed into a spray dryer in a nitrogen gas atmosphere at a temperature of 140 °C, and gasflow-drying was performed while dropletization was performed to obtain composite particles 1.

The above composite particles 1, crystalline Si particles (particle diameter: approximately 2 µm, manufactured by Kojundo Chemical Lab Co., Ltd.), and a PVdF-HFP binder (manufactured by Kureha Co., Ltd.) were dispersed and dissolved in dimethyl carbonate (manufactured by Nacalai Tesque, Inc.) at a mass ratio of composite particles 1: crystalline Si particles: binder = 50:50:7 to obtain a slurry. This slurry was sprayed into a spray dryer in a nitrogen gas atmosphere at a temperature of 140 °C, and gasflow-drying of the slurry was performed while performing dropletization to obtain the active material composite particle according to Example 1.

### 1.3 Example 2

The above nanoporous Si, crystalline Si particles (particle diameter: approximately 2 µm, manufactured by Kojundo Chemical Lab Co., Ltd.), and a PVdF-HFP binder (manufactured by Kureha Co., Ltd.) were dispersed and dissolved in dimethyl carbonate (manufactured by Nacalai Tesque, Inc.) at a mass ratio of nanoporous Si particles: crystalline Si particles: binder = 50:50:26.7 to obtain a slurry. This slurry was sprayed into a spray dryer in a nitrogen gas atmosphere at a temperature of 140 °C, and gasflow-drying of the slurry was performed while performing dropletization to obtain the active material composite particle according to Example 2.

### 2. Preparation of Solid Electrolyte

0.550 g of Li₂S (manufactured by Furuuchi Chemical Corporation), 0.887 g of P₂S₅ (manufactured by Aldrich), 0.285 g of LiI (manufactured by Nippoh Chemicals Co., Ltd.), and 0.277 g of LiBr (manufactured by Kojundo Chemical Lab Co., Ltd.) were mixed in an agate mortar for 5 minutes. 4 g of n-heptane (dehydrated grade, manufactured by Kanto Kagaku Co., Inc.) was added to the obtained mixture, and mechanical milling was performed for 40 hours using a planetary ball mill to obtain a sulfide solid electrolyte.

### 3. Preparation of Positive Electrode Mixture

LiNi_{1/3}Co_{1/3}Mn_{1/3}O₂ (manufactured by Nichia Chemical Industries, Ltd.) was surface-treated with LiNbO₃ to obtain a positive electrode active material. 1.5 g of this positive electrode active material, 0.023 g of a conductive aid (VGCF, manufactured by Showa Denko K.K.), 0.239 g of the above sulfide solid electrolyte, 0.011 g of a binder (PVdF, manufactured by Kureha Co., Ltd.), and 0.8 g of butyl butyrate (manufactured by Kishida Chemical Co., Ltd.) were mixed using an ultrasonic homogenizer (UH-50, manufactured by SMT) to obtain a positive electrode mixture.

### 4. Preparation of Negative Electrode Mixture

1.0 g of nanoporous Si according to the above Comparative Example, 1.0 g of the active material composite particle according to Example 1, or 1.0 g of the active material composite particle according to Example 2, 0.04 g of a conductive aid (VGCF, manufactured by Showa Denko K.K.), 0.776 g of the above sulfide solid electrolyte, 0.02 g of a binder (PVdF, manufactured by Kureha Co., Ltd.), and 1.7 g of butyl butyrate (manufactured by Kishida Chemical Co., Ltd.) were mixed using a homogenizer (UH-50, manufactured by SMT) to obtain a negative electrode mixture.

### 5. Preparation of Evaluation Battery

0.065 g of the above sulfide solid electrolyte was placed in a 1 cm² ceramic mold and pressed at 1 ton/cm² to produce a solid electrolyte layer. 0.018 g of the above positive electrode mixture was placed on one side and pressed at 1 ton/cm² to produce a positive electrode active material layer. A negative electrode active material layer was prepared by placing 0.0054 g of the above negative electrode mixture on the side opposite to the positive electrode active material layer and pressing at 4 tons/cm². Further, an Al foil was used for the positive electrode current collector, and a Cu foil was used for the negative electrode current collector. An evaluation battery (all-solid-state battery) was produced in this manner.

### 6. Evaluation

### 6.1 Cross-Sectional Observation of Active Material Composite Particle

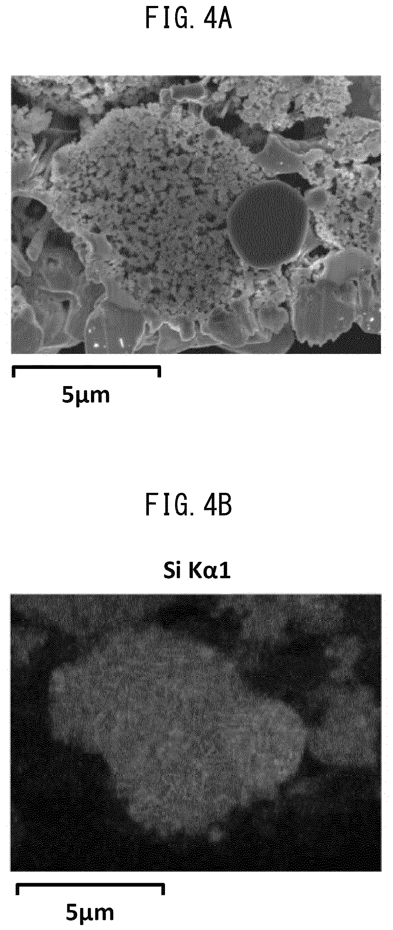

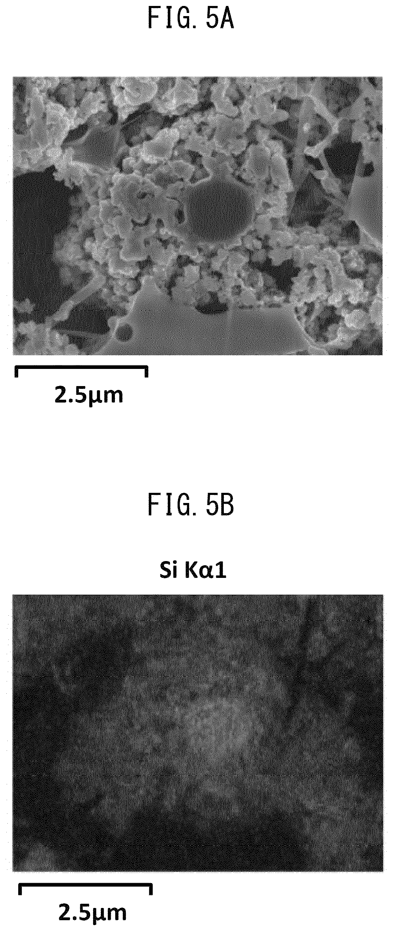

For each of the active material composite particles of Examples 1 and 2, the cross-sectional structure before pressing was observed using SEM, the elements contained in the cross-section of the composite particles were analyzed using EDX, and the cross-sectional structure of the composite particles was identified through image processing. FIG. 4A is a cross-sectional SEM image of the composite particle according to Example 1, FIG. 4B shows an EDX distribution for Si in the cross-sectional SEM image of the composite particle according to Example 1, FIG. 5A is a cross-sectional SEM image of the composite particle according to Example 2, and FIG. 5B is an EDX distribution for Si in a cross-sectional SEM image of the composite particle according to Example 2.

As shown in FIGS. 4A, 4B, 5A, and 5B, in the active material composite particles according to Examples 1 and 2, a plurality of the nanoporous Si particles, which are relatively small particles, and the crystalline Si particle, which is a relatively large particle, were mixed with each other to form a secondary particle. As described above, the ratio (D₂/D₁) of the particle diameter (D₂) of the crystalline Si particle to the particle diameter (D₁) of the nanoporous Si particles was 2.0 or more, and such a relationship was maintained, even in the composite particles.

As shown in FIGS. 4A and 4B, in the active material composite particle according to Example 1, the crystalline Si particle (second particle) was exposed on the outer surface of the composite particle. Conversely, as shown in FIGS. 5A and 5B, in the active material composite particle according to Example 2, the crystalline Si particle (second particle) was present inside the nanoporous Si particles (first particles). In other words, the active material composite particle according to Example 2 had a core and a shell, the core included a crystalline Si particle, the shell included a plurality of nanoporous Si particles and did not include a crystalline Si particle.

### 6.2 Confirmation of Increase in Restraining Pressure of Evaluation Battery

Each of the evaluation batteries of the Comparative Example and the Examples was restrained at a restraining pressure of 5 MPa. The restrained evaluation battery was CC/CV charged to 4.55 V at a rate of 1/10 C. Due to charging, the negative electrode expanded and an increase in restraining pressure was confirmed. The increase in restraining pressure after charging relative to the restraining pressure before charging was measured. The results are shown in Table 1 below. In addition, in Table 1 below, the increase in restraining pressure of the evaluation batteries according to Examples 1 and 2 is shown relatively, with the increase in restraining pressure of the evaluation battery according to Comparative Example being 100. The smaller the value shown in Table 1, the smaller the increase in restraining pressure.

**TABLE 1**

| | Increase in restraining pressure [-] |
|---|---|
| Comparative Example | 100 |
| Example 1 | 91 |
| Example 2 | 70 |

It is known that the reaction potential between crystalline Si particles and Li is lower than the reaction potential between amorphous nanoporous Si particles and Li. Specifically, during charging, the nanoporous Si particles react with Li and expand earlier than the crystalline Si particles. In each of the batteries according to the Comparative Example and Examples 1 and 2, when charged under the above conditions, substantially only the nanoporous Si particles (first particles) reacted with Li and expanded, and the crystalline Si particle (second particle) did not react with Li and remained substantially unchanged from the state before charging. Specifically, in the batteries according to Comparative Example and Examples 1 and 2, the amount of expansion of the nanoporous Si particles was substantially the same. However, as shown in Table 1, the increase in restraining pressure was smaller in the batteries according to Examples 1 and 2 than in the battery according to the Comparative Example. Specifically, the amount of expansion of the entire negative electrode of each of the batteries according to Examples 1 and 2 was significantly less than that of the battery according to the Comparative Example. This is presumed to be due to the following mechanism.

Examples 1 and 2, in which the composite particle of the nanoporous Si particles and the crystalline Si particle was used as the negative electrode active material, differ in this regard from the Comparative Example. The reaction potential between the crystalline Si particle and Li is lower than the reaction potential between the amorphous nanoporous Si particles and Li. Thus, under the above charging conditions, after charging the battery, the nanoporous Si particles reacted with Li and expanded, while the crystalline Si particle did not react with Li and did not substantially change from the state before charging. Further, as described above, the ratio D₂/D₁ of the particle diameter D₂ of the crystalline Si particle to the particle diameter D₁ of the nanoporous Si particles was 2.0 or more, and specifically, the crystalline Si particle was sufficiently large as compared to the nanoporous Si particles. In such a case, it is considered that the crystalline Si particle functions as a pillar in the active material composite particle, and the structure and voids of the active material composite particle as a whole were easily maintained by the crystalline Si particle. It is considered that, as a result, even if the nanoporous Si particles expanded, the expansion of the active material composite particle as a whole was alleviated, the expansion of the negative electrode became smaller, whereby the increase in restraining pressure was smaller. It is considered that in particular, when the crystalline Si particle was present inside the nanoporous Si particles, in the manner of Example 2, the expansion of the nanoporous Si became more isotropic, whereby the expansion of the active material composite particle as a whole was further alleviated, and it is considered that, as a result, the increase in restraining pressure was decreased more markedly.

In the above Examples, the cases where amorphous nanoporous Si particles were used as the first particles and a crystalline Si particle was used as the second particle for constituting the active material composite particle were exemplified, but the technology of the present disclosure is not limited to these embodiments. For example, as described above, the second particle may be of any type as long as it can function as a pillar, and a particle other than crystalline Si particles can be employed. When a particle other than crystalline Si particles is employed as the second particle, it is considered that the first particles need not necessarily be amorphous. Specifically, it is considered that the active material composite particle having the following features (1) to (4) will exhibit certain effects through the same mechanism as above. However, it is considered that the effect is more likely to be enhanced when amorphous nanoporous Si particles are used as the first particles and a crystalline Si particle is used as the second particle for constituting the active material composite particle.
(1) The active material composite particle comprises a plurality of first particles and at least one second particle.
(2) The first particles comprise porous silicon.
(3) The reaction potential between the second particle and Li is lower than the reaction potential between the porous silicon and Li.
(4) The ratio D₂/D₁ of the particle diameter D₂ of the second particle to the particle diameter D₁ of the first particles is 2.0 or more.

Further, in the above Examples, though the cases in which the active material composite particle containing a binder was used are shown, the presence of the binder is optional as long as the shape of the active material composite particle is maintained. However, when the active material composite particle contains a binder, the shape of the active material composite particle can more easily be maintained.

### REFERENCE SIGNS LIST

- 1: active material composite particle
- 1a: first particle
- 1b: second particle
- 100: secondary battery
- 10: positive electrode current collector
- 20: positive electrode active material layer
- 30: electrolyte layer
- 40: negative electrode active material layer
- 50: negative electrode current collector

## Claims

1. An active material composite particle, comprising a plurality of first particles and at least one second particle, wherein
the first particles comprise porous silicon,
a reaction potential between the second particle and Li is lower than a reaction potential between the porous silicon and Li, and
a ratio D₂/D₁ of a particle diameter D₂ of the second particle to a particle diameter D₁ of the first particles is 2.0 or more.

2. The active material composite particle according to claim 1, wherein
the porous silicon constituting the first particles is amorphous, and
the second particle comprises crystalline silicon.

3. The active material composite particle according to claim 2, wherein
the crystalline silicon constituting the second particle is porous.

4. The active material composite particle according to any one of claims 1 to 3, wherein
the second particle is present inside the first particles.

5. The active material composite particle according to any one of claims 1 to 4, wherein
a binder is included together with the first particles and the second particle.

6. The active material composite particle according to any one of claims 1 to 5, wherein
the second particle is spherical.

7. A secondary battery, comprising a positive electrode active material layer, an electrolyte layer, and a negative electrode active material layer, wherein
the negative electrode active material layer contains the active material composite particle according to any one of claims 1 to 6.

8. The secondary battery according to claim 7, wherein
at least one of the positive electrode active material layer, the electrolyte layer, and the negative electrode active material layer comprises a solid electrolyte.

9. A production method for an active material composite particle, the method comprising:
dropletizing a slurry containing a plurality of first particles, at least one second particle, and a solvent to obtain a slurry droplet, and
gasflow-drying the slurry droplet in a heated gas to obtain an active material composite particle containing the plurality of first particles and the at least one second particle, wherein
the first particles comprise porous silicon,
a reaction potential between the second particle and Li is lower than a reaction potential between the porous silicon and Li, and
a ratio D₂/D₁ of a particle diameter D₂ of the second particle to a particle diameter D₁ of the first particles is 2.0 or more.

10. The production method according to claim 9, wherein
the dropletizing the slurry and the gasflow-drying the slurry droplet are performed by spray-drying.

11. The production method according to claim 9 or 10, wherein
the slurry contains a binder together with the first particles and the second particle.
